(19)

**Europäisches Patentamt**

**European Patent Office**

**Office européen des brevets**

(11) **EP 4 530 755 A1**

(12) **EUROPEAN PATENT APPLICATION**

(43) Date of publication:
02.04.2025 Bulletin 2025/14

(21) Application number: 24159950.5

(22) Date of filing: 27.02.2024

(51) International Patent Classification (IPC):
*G03G 21/20* (2006.01)  *H04N 1/00* (2006.01)
*G01N 21/86* (2006.01)

(52) Cooperative Patent Classification (CPC):
H04N 1/00734; G03G 15/5029; G03G 15/6591;
G03G 21/203; H04N 1/00726; G01N 2021/8663

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 JP 2023161834

(71) Applicant: FUJIFILM Business Innovation Corp.
Minato-ku
Tokyo (JP)

(72) Inventors:
• TANAKA, Kumiko
Ebina-shi, Kanagawa (JP)
• OMORI, Masao
Ebina-shi, Kanagawa (JP)

(74) Representative: Kurig, Thomas
Becker Kurig & Partner
Patentanwälte mbB
Bavariastraße 7
80336 München (DE)

(54) **INFORMATION PROCESSING SYSTEM, PROGRAM, AND INFORMATION PROCESSING METHOD**

(57) An information processing system includes a processor and a sensor device, in which the sensor device irradiates target paper with light and detects light in an absorption band that is transmitted through the paper and caused by an expansion and contraction motion of H-O-H, and the processor is configured to: calculate absorption information indicating an absorption amount in the absorption band by the paper on the basis of a detection result by the sensor device; and calculate an expansion and contraction ratio of the paper corresponding to the calculated absorption information using a prediction model that predicts the expansion and contraction ratio of the paper from the absorption information of the absorption band in the paper.

EP 4 530 755 A1

**Description**

BACKGROUND OF THE INVENTION

(i) Field of the Invention

The present invention relates to an information processing system, a program, and an information processing method.

(ii) Description of Related Art

Paper expands and contracts according to humidity of an environment. The characteristic of how much the paper expands and contracts according to a change in humidity is called a humidity expansion and contraction ratio. The humidity expansion and contraction ratio is defined in a paper industry standard called JAPAN TAPPI No. 28 "Paper and paperboard-Test method for expansion and contraction ratio due to humidity changes", and a method for measuring the humidity expansion and contraction ratio is specified in the standard. The Japanese Industrial Standards and the International Organization for Standardization also include standards for the expansion and contraction ratio of paper according to humidity.

The expansion and contraction ratio of the paper affects print quality such as the occurrence of a paper jam on a paper transport path and the occurrence of curl due to fixing. The expansion and contraction ratio of the paper varies greatly depending on a variation in conditions for each paper production lot, for example, a difference in a factory where the paper is produced, a difference in season, an environment in which the paper is used, or the like.

In the method for measuring the expansion and contraction ratio specified in the standard, the humidity of the environment in which the paper is placed is changed in stages, the paper is adjusted to each humidity, and the dimensions of the paper are measured. Therefore, a lot of time is required for the measurement.

JP2021-105629A, JP2019-45740A, and JP2009-128874A disclose a technique that predicts the contraction of paper due to heating in a fixing unit and uses a prediction result to control two-sided printing, which does not have a direct relationship with the expansion and contraction ratio of the paper according to the humidity.

An apparatus disclosed in JP2021-105629A includes a temperature measurement unit that measures internal temperature of a machine, an image forming unit that forms a toner image and transfers the toner image to paper, a fixing unit that fixes the toner image to the paper, a paper discrimination unit as a first detection unit that detects a size of the paper before passing through the fixing unit, a paper reading unit as a second detection unit that detects the size of the paper after passing through the fixing unit, a contraction ratio calculation unit that calculates a contraction ratio of the paper on the basis of detection results of the first detection unit and the second detection unit, a storage unit that stores contraction ratio data for each in-machine environment in which an in-machine temperature environment and the contraction ratio of the paper are associated with each other, and an image correction unit that corrects toner image formation conditions on the basis of the contraction ratio of the paper stored in the storage unit in association with the internal temperature of the machine measured by the measurement unit.

An apparatus disclosed in JP2019-45740A includes a transfer unit that transfers an image formed by an image forming unit to paper, a fixing unit that heats the paper transported from the transfer unit to fix the image transferred to the paper, and a paper refeeding path that transports the paper passing through the fixing unit to the transfer unit again. In addition, the apparatus includes a detection unit that is disposed on a downstream side of the fixing unit in a paper transport direction and detects an in-machine environment or the characteristics of the paper and a correction value calculation unit that calculates an expected expansion and contraction ratio of the paper in a case where the transfer unit transfers a back-side image from a value detected by the detection unit.

An apparatus disclosed in JP2009-128874A is an image forming apparatus for two-sided printing that prints a front-side image of a document on a front side of paper and then prints a back-side image of the document on a back side of the paper and includes a sensor that acquires characteristics of paper to be subjected to two-sided printing, a contraction ratio acquisition unit that acquires a contraction ratio of the paper indicating the percentage of contraction of the paper occurring until the image is printed on the back side after the image is printed on the front side, on the basis of the acquired characteristics of the paper, and a correction unit that corrects image data corresponding to the back-side image on the basis of the acquired contraction ratio.

Further, JP1995-243187A discloses a technique that emits near-infrared rays to be transmitted through paper or the like and analyzes the transmitted light to measure the orientation of fibers in the paper or the like.

SUMMARY OF THE INVENTION

In order to measure an expansion and contraction ratio using the method specified in the standard, a dedicated measurement device is required, and a very long time is required. The measurement method based on this standard is not appropriate in a case where a user wants to quickly know the expansion and contraction ratio of paper such as in a case where the user wants to know the expansion and contraction ratio of the paper at the moment when printing is performed on the paper.

An object of the present invention is to provide a method for calculating an expansion and contraction ratio of paper with respect to a dimension of the paper in a reference environment.

According to a first aspect of the present invention, there is provided an information processing system including a processor and a sensor device, in which the sensor device irradiates target paper with light and detects light in an absorption band that is transmitted through the paper and caused by an expansion and contraction motion of H-O-H, and the processor is configured to: calculate absorption information indicating an absorption amount in the absorption band by the paper on the basis of a detection result by the sensor device; and calculate an expansion and contraction ratio of the paper corresponding to the calculated absorption information using a prediction model that predicts the expansion and contraction ratio of the paper from the absorption information of the absorption band in the paper.

According to a second aspect of the present invention, in the information processing system according to the first aspect, the absorption band may be a wavelength band in a vicinity of 1450 nm or in a vicinity of 2900 nm.

According to a third aspect of the present invention, in the information processing system according to the first aspect, the processor may be configured to enlarge or reduce an image to be printed on the paper according to the calculated expansion and contraction ratio.

According to a fourth aspect of the present invention, in the information processing system according to the third aspect, the processor may be configured to: calculate each of an enlargement and reduction ratio of an image to be printed on a front side of the paper and an enlargement and reduction ratio of an image to be printed on a back side of the paper on the basis of the expansion and contraction ratio; and enlarge or reduce the image to be printed on the front side of the paper and the image to be printed on the back side of the paper at the enlargement and reduction ratios calculated for each image. The enlargement and reduction ratio of the image to be printed on the back side of the paper may be determined such that a size of the image on the back side printed after the image on the front side of the paper is fixed is equal to a size of the image on the front side.

According to a fifth aspect of the present invention, there is provided a program causing a computer to execute a process including: acquiring a detection result by a sensor device that irradiates target paper with light and detects light in an absorption band that is transmitted through the paper and caused by an expansion and contraction motion of H-O-H and calculating absorption information indicating an absorption amount in the absorption band by the paper from the acquired detection result; and calculating an expansion and contraction ratio of the paper corresponding to the calculated absorption information using a prediction model that predicts the expansion and contraction ratio of the paper from the absorption information of the absorption band in the paper.

According to a sixth aspect of the present invention, there is provided an information processing method including: acquiring a detection result by a sensor device that irradiates target paper with light and detects light in an absorption band that is transmitted through the paper and caused by an expansion and contraction motion of H-O-H and calculating absorption information indicating an absorption amount in the absorption band by the paper from the acquired detection result; and calculating an expansion and contraction ratio of the paper corresponding to the calculated absorption information using a prediction model that predicts the expansion and contraction ratio of the paper from the absorption information of the absorption band in the paper.

According to the first aspect, the second aspect, the fifth aspect, and the sixth aspect of the present invention, it is possible to provide a method for calculating an expansion and contraction ratio of paper with respect to the dimensions of the paper in a reference environment.

According to the third aspect of the present invention, it is possible to print an image having a size corresponding to the current expansion and contraction state of the paper.

According to the fourth aspect of the present invention, it is possible to match the sizes of the images on the front and back sides of the paper in two-sided printing.

BRIEF DESCRIPTION OF THE DRAWINGS

Exemplary embodiment(s) of the present invention will be described in detail based on the following figures, wherein:

Fig. 1 is a diagram illustrating a configuration of a system for constructing a prediction model;
Fig. 2 is a diagram illustrating a procedure of a process for constructing the prediction model;
Fig. 3 is a diagram illustrating a detection value in a 1450-nm band and a measurement result of an expansion and contraction ratio;
Fig. 4 is a diagram illustrating a detection value in a 1940-nm band and a measurement result of the expansion and contraction ratio;

Fig. 5 is a diagram illustrating a correlation between the expansion and contraction ratio predicted by a regression expression calculated using the 1450-nm band and the measured expansion and contraction ratio;

Fig. 6 is a diagram illustrating a correlation between the expansion and contraction ratio predicted by the regression expression calculated using the 1940-nm band and the measured expansion and contraction ratio;

Fig. 7 is a diagram illustrating a configuration of an image forming apparatus using the prediction model;

Fig. 8 is a diagram illustrating content of enlargement-and-reduction ratio information applied during one-sided printing or during printing on a front side in two-sided printing;

Fig. 9 is a diagram illustrating content of enlargement-and-reduction ratio information applied during printing on a back side in two-sided printing;

Fig. 10 is a diagram illustrating a processing procedure executed by the image forming apparatus; and

Fig. 11 is a diagram illustrating an example of a hardware configuration of a computer.

## DETAILED DESCRIPTION OF THE INVENTION

<Principle of Expansion-and-Contraction Ratio Prediction>

A method for predicting an expansion and contraction ratio of paper in a mode (hereinafter, referred to as an exemplary embodiment) for carrying out the present invention will be described.

Water has a property of absorbing infrared rays and particularly has a high absorption rate in the vicinity of a wavelength of 1940 nm (nanometers), in the vicinity of a wavelength of 2900 nm, and in the vicinity of a wavelength of 1450 nm. The vicinity of the wavelength of 1940 nm is an absorption band due to stretching and bending vibrations of O-H (hydroxyl group). The vicinity of the wavelength of 2900 nm is an absorption band due to stretching vibration of H-O-H (water molecules). The vicinity of the wavelength of 1450 nm is a wavelength band that is half of the wavelength band of 2900 nm, and water also absorbs infrared rays in the vicinity of the wavelength of 1450 nm well.

Since the absorption amount of infrared rays has a correlation with the amount of water included in a target, the absorption amount of water can be measured by accurately measuring the absorption amount of infrared rays.

Paper is mainly composed of cellulose fibers. Cellulose has an O-H group. In a case where paper does not include water, the O-H groups of adjacent cellulose fibers are directly bonded to each other by hydrogen bonding. In a case where paper contains water, the cellulose fibers are loosely bonded to each other by hydrogen bonding through H-O-H (water molecules).

In a case where humidity increases and the amount of water included in the paper increases, the paper expands. On the other hand, in a case where the amount of water includes in the paper decreases, the paper contracts. Therefore, the expansion and contraction ratio of the paper according to the humidity can be measured or predicted from the absorption amount of infrared rays.

In a case where the amount of water in the paper or the expansion and contraction ratio of the paper is measured or predicted by infrared spectroscopy, it is considered that accuracy is higher in a 1450-nm band or a 2900-nm band than in a 1940-nm band. The reason is that, while infrared rays in the 1940-nm band are also absorbed by the O-H groups of the cellulose fibers constituting the paper, the infrared rays in the 1450-nm band or in the 2900-nm band are less likely to be absorbed by the cellulose fibers and are mostly absorbed by water included in the paper.

In the present exemplary embodiment, the 1450-nm band, the 2900-nm band, or both the wavelength bands are referred to as a wavelength band of interest. That is, the absorption band due to the expansion and contraction motion of H-O-H is referred to as the wavelength band of interest. Then, the absorption amount of infrared rays in the wavelength band of interest by the paper is measured, and the expansion and contraction ratio of the paper is calculated on the basis of the measured absorption amount.

Here, the expansion and contraction ratio described in the present exemplary embodiment is a value indicating how much the dimension of the paper in the current environment increases or decreases with respect to the dimension of the paper in a case where the environment is in a reference state. The reference state is a combination of specific temperature (for example, 20 degrees Celsius) and humidity (for example, 25%). The dimension of the paper in a case where the environment is in the reference state (this is called a nominal dimension) is the dimension of the paper in a case where equilibrium is achieved in the reference state. The expansion and contraction ratio may be calculated for each of the vertical direction and the horizontal direction of the paper or may be one value based on both the expansion and contraction ratios (for example, an average of the expansion and contraction ratios). In a case where the dimension of the paper in the reference state is L0 and the dimension of the paper in the current state is L1, the expansion and contraction ratio is calculated by the following expression.

$$\text{Expansion and contraction ratio} = 100 \times (L1 - L0)/L0$$

In this example, the expansion and contraction ratio is expressed as a percentage. In a case where the expansion and contraction ratio of the paper is +1%, the paper is expanded by 1% with respect to the nominal dimension. In a case where the expansion and contraction ratio of the paper is -1%, the paper is contracted by 1% with respect to the nominal dimension.

The dimension of the paper changes depending on a change in the amount of water contained in the paper. As the amount of water included in the paper is larger, the paper expands more. Then, the amount of water included in the paper has a strong correlation with the absorption amount of infrared rays in the wavelength band of interest. Therefore, in the present exemplary embodiment, a prediction model is constructed that predicts or estimates the expansion and contraction ratio of the paper from the absorption amount of infrared rays in the wavelength band of interest among the infrared rays transmitted through the paper.

<Configuration of System for Constructing Prediction Model>

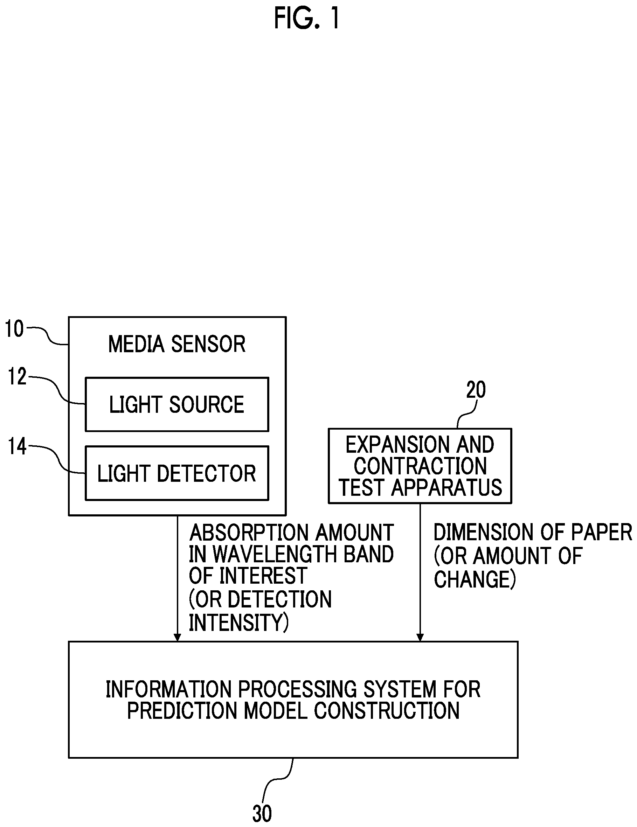

Fig. 1 illustrates a configuration of a system for estimating the expansion and contraction ratio of paper from the absorption amount of infrared rays in the wavelength band of interest. This system includes a media sensor 10, an expansion and contraction test apparatus 20, and an information processing system 30 for constructing the prediction model.

The media sensor 10 is a device for detecting one or more characteristics of paper. The characteristics detected by the media sensor 10 include the absorption amount of light (that is, infrared rays in this case) in the wavelength band of interest. In order to detect the absorption amount, the media sensor 10 includes a light source 12 that projects light (for example, infrared rays) in a wavelength band including the wavelength band of interest to the paper and a light detector 14 that detects the light which has been emitted from the light source 12 and transmitted through the paper. The light detector 14 has at least a function of extracting and detecting light in the wavelength band of interest. Further, the media sensor 10 may have a function of detecting one or more characteristics other than the absorption amount of light in the wavelength band of interest, for example, the thickness, surface smoothness, and basis weight of the paper. The media sensor 10 includes one or more sensors corresponding to one or more characteristics to be detected.

Some media sensors 10 are incorporated into an image forming apparatus, such as a printer or a multifunction machine (that is, a multifunction apparatus having the functions of a printer, a scanner, a copying machine, and the like) and are used to detect the characteristics of paper used in the apparatus. The image forming apparatus controls a printing process according to a detection result of the media sensor 10. The media sensor 10 included in the system illustrated in Fig. 1 is a model identical to the model of the media sensor mounted on the image forming apparatus in which the prediction model to be constructed by this system is used.

The expansion and contraction test apparatus 20 is identical to a device that is used to measure the expansion and contraction ratio or the degree of expansion and contraction based on a standard such as JAPAN TAPPI No. 28. The expansion and contraction test apparatus 20 has a closed measurement chamber that can control humidity in several stages and includes a mechanism that measures the dimension (for example, a length in the vertical direction) of paper, which is an object to be tested and is set in the measurement chamber, or the amount of change in the dimension of the paper in the current state with respect to the nominal dimension of the paper (hereinafter, collectively referred to as a dimension or the like). The media sensor 10 is installed in the measurement chamber to measure the absorption amount of light in the wavelength band of interest by the paper set in the measurement chamber.

The absorption amount in the wavelength band of interest detected by the media sensor 10 and the dimension or the like of the paper measured by the expansion and contraction test apparatus 20 are input to the information processing system 30. The information processing system 30 calculates the expansion and contraction ratio for the nominal dimension from the input dimension or the like and stores a pair of the input absorption amount and the expansion and contraction ratio. The information processing system 30 constructs a prediction model on the basis of a set of the pairs of the absorption amount and the expansion and contraction ratio measured in each stage in a case where the humidity in the measurement chamber is changed in stages.

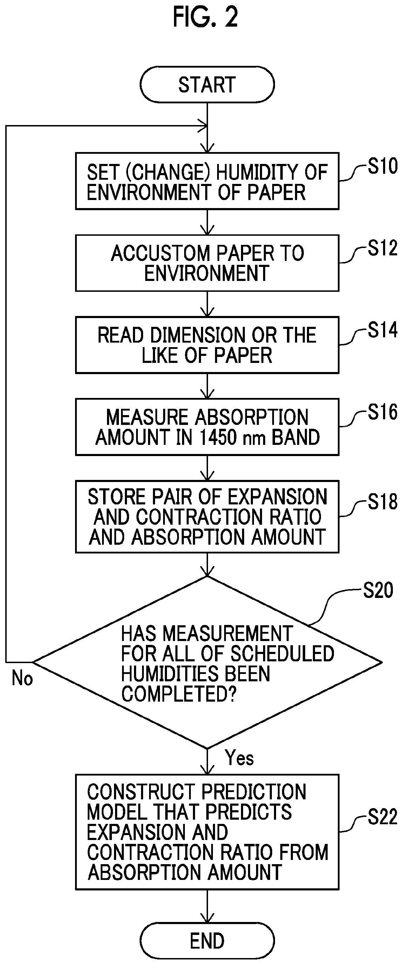

Fig. 2 illustrates a procedure of a prediction model construction process by this system. In this procedure, an operator sets paper in the measurement chamber of the expansion and contraction test apparatus 20 and then operates the expansion and contraction test apparatus 20 to adjust the humidity in the measurement chamber to the initial humidity specified in a plan (S10). The plan defines a rule for increasing the humidity in stages, for example, a rule for increasing the humidity in stages at an interval of 5% from 25% to 80% for the first time. After the humidity in the measurement chamber is adjusted to a predetermined humidity, the operator waits for enough time (this time is known) for the paper to reach equilibrium with respect to the humidity (S12). After S12, the operator reads the value of the dimension or the like of the paper displayed on a display unit of the expansion and contraction test apparatus 20 and inputs the value to the information processing system 30 (S14). In addition, in a case where the amount of change in the dimension of the paper in the current state with respect to the nominal dimension of the paper is displayed as the dimension or the like of the paper on the display unit of the expansion and contraction test apparatus 20, before S10, the paper set in the measurement chamber is equilibrated to the reference state, and the dimension of the paper in the equilibrium is measured and input to the information processing system 30. Further, in a case where the initial humidity in the plan is set as the reference state and the paper is equilibrated to the initial humidity, the dimension (for example, the length) of the paper at that time may be measured and input to the information processing system 30 in S14.

Then, the operator measures the absorption amount in the 1450-nm band with the media sensor 10, reads the value of the measurement result, and inputs the value to the information processing system 30 (S16). In this example, the 1450-nm band is used as the wavelength band of interest. The 1450-nm band is a wavelength band with a predetermined width that has a wavelength of 1450 nm as the center. For example, a wavelength band within $\pm 3\%$ of the wavelength of 1450 nm may be the 1450-nm band. Further, a wavelength band within $\pm 5\%$ of the wavelength of 1450 nm may be the 1450-nm band. 3% and 5% indicating the width of the wavelength band are only examples.

In this case, in the media sensor 10, the light source 12 emits light in a wavelength band including the 1450-nm band to the paper, and the light detector 14 extracts light in the 1450-nm band from the light transmitted through the paper and measures the intensity of the light. Then, the media sensor 10 calculates the absorption amount in the 1450-nm band on the basis of the intensity measured by the light detector 14.

The information processing system 30 calculates the expansion and contraction ratio of the paper from the input value of the dimension or the like of the paper and stores the obtained expansion and contraction ratio in association with the absorption amount input in S16 (S18).

Then, the operator checks whether the measurement of all of the humidities specified in the plan has been completed (S20). In a case where the measurement has not been completed, the process returns to S10, the humidity in the measurement chamber is adjusted to the next humidity, and the processes in S12 and the subsequent steps are repeated. In a case where it is determined in S20 that the measurement of all of the planned humidities has been completed, the operator instructs the information processing system 30 to construct the prediction model based on information of a pair group of the expansion and contraction ratio and the absorption amount at each humidity stored so far. The information processing system 30 executes a prediction model construction program (S22).

This program performs, for example, regression analysis on the pair group of the expansion and contraction ratio and the absorption amount at each humidity to calculate a regression expression for calculating the expansion and contraction ratio from the absorption amount.

In the above description, the operator manages the procedure of the operation necessary for constructing the prediction model. However, the information processing system 30 may manage a portion or all of the procedure. That is, for example, the information processing system 30 may manage the adjustment of the humidity in the measurement chamber of the expansion and contraction test apparatus 20, and the information processing system 30 may automatically acquire the measured value from the expansion and contraction test apparatus 20 and the media sensor 10.

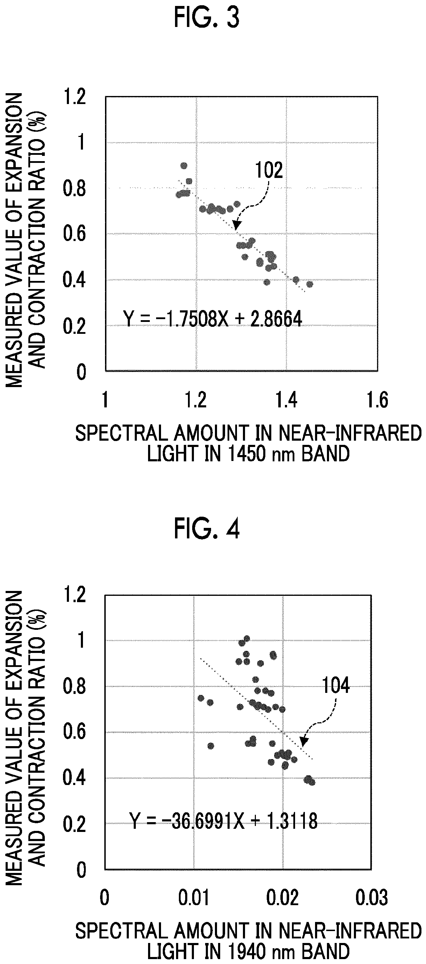

An example of the regression expression will be described with reference to Fig. 3. In a graph illustrated in Fig. 3, the horizontal axis is a spectral amount in the 1450-nm band, that is, detection intensity, and the vertical axis is the value of the expansion and contraction ratio measured in S14. The detection intensity in the 1450-nm band is the intensity of light in the 1450-nm band detected by the light detector 14. The remaining value obtained by subtracting the detection intensity from the intensity of a component in the 1450-nm band in the light emitted from the light source 12 is the absorption amount in the 1450-nm band by the paper. Since it can be assumed that the intensity of the light output from the light source 12 is constant (therefore, the intensity of near-infrared light in the 1450-nm band in the light is also constant), the detection intensity in the 1450-nm band by the light detector 14 has a one-to-one relationship with the absorption amount in the 1450-nm band by the paper. Each point plotted in the graph illustrated in Fig. 3 indicates the measurement result at each humidity, that is, a pair of the detection intensity in the 1450-nm band and the expansion and contraction ratio. Hereinafter, the description will be made mainly using the concept of the absorption amount. However, since the absorption amount and the detection intensity have a one-to-one relationship as described above, the identical operation and effect can be obtained even in a case where the detection intensity is used instead of the absorption amount. The absorption amount and the detection intensity are examples of absorption information indicating the absorption amount in the wavelength band of interest by the paper.

In a case where linear simple regression analysis is performed on the point groups, $Y = -1.7508X + 2.8664$ is obtained as a straight line 102 that is fitted to the point groups. X is the detection intensity in the 1450-nm band, and Y is the expansion and contraction ratio. Since each point is fairly close to the straight line 102, the straight line 102 indicates the point groups with fairly high accuracy. In a case where the horizontal axis is the absorption amount in the 1450-nm band, the obtained straight line rises to the right, and the value of an intercept also changes. Even in this case, the straight line indicates the point group (of the absorption amount and the expansion and contraction ratio) with fairly high accuracy as in the case illustrated in Fig. 3. This straight line is the prediction model for predicting the expansion and contraction ratio of the paper from the absorption amount (or the detection intensity).

Fig. 3 illustrates a case where attention is paid to the 1450-nm band. As a comparative example of this, Fig. 4 illustrates an example of a case where attention is paid to the 1940-nm band which is also likely to be absorbed by water. Each point illustrated in a graph of Fig. 4 indicates a pair of the detection intensity (horizontal axis) in the 1940-nm band and the expansion and contraction ratio (vertical axis) of the paper at each humidity obtained in a case where a test identical to the above-described test is performed with a focus on the infrared rays in the 1940-nm band. In a case where the identical regression analysis is performed on these point groups, a straight line 104, that is, Y = -36.6991X + 1.3118 is obtained. As can be seen from comparison with Fig. 3, in the example illustrated in Fig. 4, the point group is considerably separated from the straight line 104. Therefore, the accuracy with which the straight line 104 indicates the point group is low.

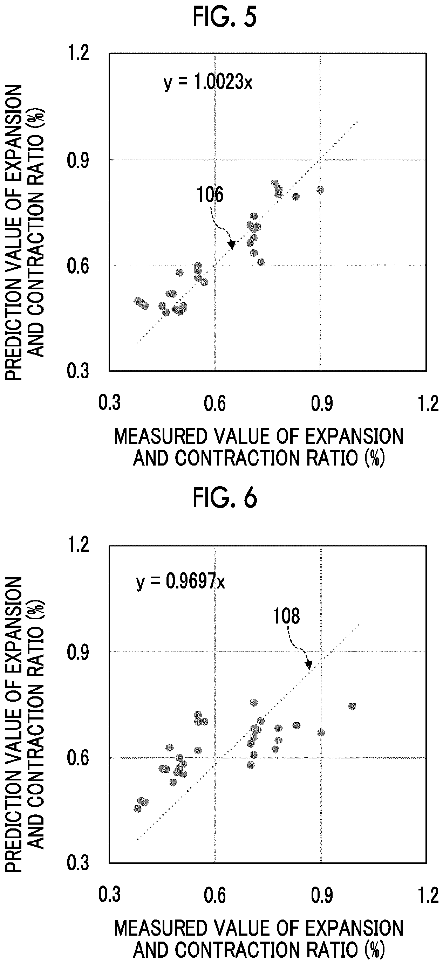

A graph illustrated in Fig. 5 indicates the correlation between the measured value and the prediction value of the expansion and contraction ratio in the example illustrated in Fig. 3 in which attention is paid to the 1450-nm band. The horizontal axis is the measured value of the expansion and contraction ratio and is calculated from the above-described procedure. The vertical axis is the prediction value of the expansion and contraction ratio and is the expansion and contraction ratio (that is, Y in Fig. 3) calculated from the detection intensity (that is, X in Fig. 3) in the 1450-nm band detected by the light detector 14 using the above-described prediction model (that is, the straight line 102 in Fig. 3). Each point plotted in the graph illustrated in Fig. 5 indicates a pair of the measured value and the prediction value of the expansion and contraction ratio at each humidity. In a case where regression analysis is performed on the point groups, a straight line 106, that is, y = 1.0023x (x is the measured value, and y is the prediction value) is obtained. Each of the plotted point groups is close to the straight line 106. Therefore, it can be seen that, in a case where the straight line 102 illustrated in Fig. 3 is used as the prediction model, it is possible to perform prediction fairly close to the measured value.

On the other hand, Fig. 6 illustrates the correlation between the measured value and the prediction value of the expansion and contraction ratio in an example in which attention is paid to the 1940-nm band. In the example illustrated in Fig. 6, in a case where regression analysis is performed on a point group, a straight line 108, that is, y = 0.9697x is obtained. However, in the example illustrated in Fig. 6, it can be seen that many points are separated from the straight line 108 and an accurate prediction value is not obtained by the straight line 108.

As described above, the prediction model that can predict the expansion and contraction ratio of the paper with high accuracy from the absorption amount in the 1450-nm band can be obtained by the system illustrated in Fig. 1.

In the above example, the information processing system 30 performs regression analysis to calculate a linear regression expression as the prediction model. However, this is only an example. As another example, the information processing system 30 may construct the prediction model using, for example, a neural network. In this case, the information processing system 30 inputs the absorption amount at each humidity measured by the test to the neural network and gives the measured value of the expansion and contraction ratio at each humidity as training data to train the neural network such that the expansion and contraction ratio is predicted from the absorption amount.

The prediction model is constructed for each type of paper used in the assumed image forming apparatus by the system illustrated in Fig. 1. The type of paper is represented by, for example, a combination of a paper type, such as uncoated paper (high-quality paper or the like) or coated paper, and the basis weight. The basis weight corresponds to the thickness of the paper.

<Image Forming Apparatus Using Prediction Model>

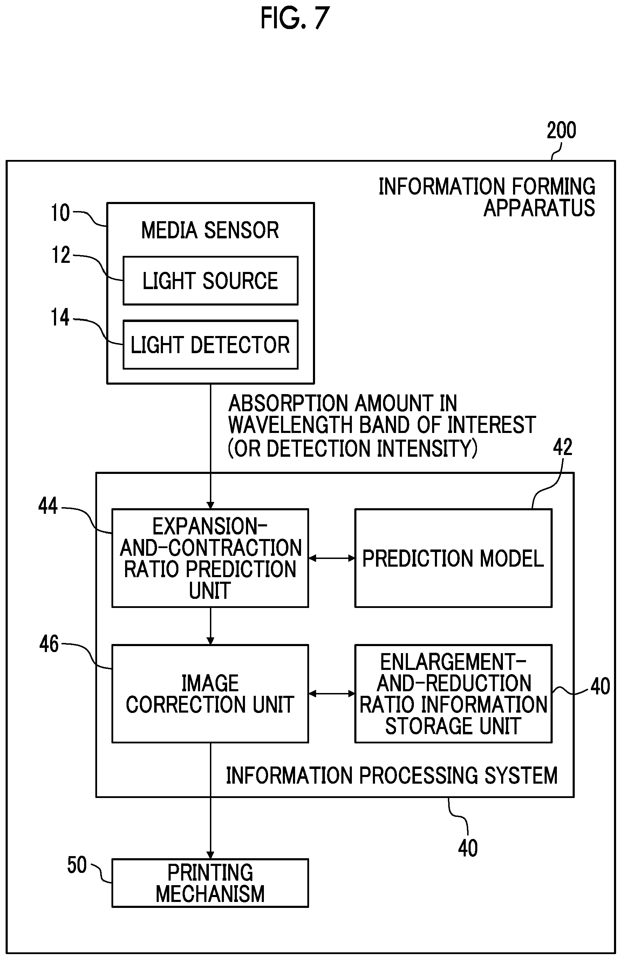

Next, an example of the image forming apparatus using the prediction model constructed in this way will be described with reference to Fig. 7.

An image forming apparatus 200 illustrated in Fig. 7 is an apparatus, such as a printer or a multifunction machine, and includes a printing mechanism 50 that prints an image on paper. In addition, the image forming apparatus 200 includes a media sensor 10 and an information processing system 40.

The media sensor 10 is a device that is a model identical to the model of the media sensor 10 in the system illustrated in Fig. 1. That is, even in the example illustrated in Fig. 7, the media sensor 10 has a function of detecting light in the wavelength band of interest (for example, the 1450-nm band) transmitted through the paper, calculating the absorption amount (or detection intensity) of the light by the paper, and outputting the absorption amount. The media sensor 10 is disposed at any position on a paper transport path in the printing mechanism 50 such that light can be emitted to the transported paper and light transmitted through the paper can be detected.

In the example illustrated in Fig. 7, control is performed to predict the expansion and contraction ratio of the paper according to the measurement of the media sensor 10 and to enlarge or reduce the image to be printed on the paper according to the expansion and contraction ratio, which is only an example. Therefore, the media sensor 10 is disposed at a position where the paper before the image is printed can be measured. For example, in a case where the printing mechanism 50 of an electrophotographic type is used, the media sensor 10 is disposed at any position in the paper transport path from a paper feeding unit to a photoconductor. Further, in the case of the printing mechanism 50 having a two-sided printing function, the media sensor 10 is provided at a position immediately before the photoconductor on the transport path through which the paper passes both during front-side printing and during back-side printing, which makes it possible to measure the paper with the identical media sensor 10 immediately before the front-side printing and immediately before the back-side printing.

The information processing system 40 is a computer that performs information processing for implementing the functions of the image forming apparatus 200. The information processing system 40 controls each unit in the image forming apparatus 200, for example, the media sensor 10, the printing mechanism 50, and other units (not illustrated). In addition, the information processing system 40 also performs a process of predicting the expansion and contraction ratio of the paper and controlling the image forming apparatus 200 according to the prediction result. Here, as an example of this control, an example in which the size of the image to be printed on paper is controlled according to the prediction result of the expansion and contraction ratio will be described. For this control, the information processing system 40 includes a prediction model 42, an expansion-and-contraction ratio prediction unit 44, an image correction unit 46, and an enlargement-and-reduction ratio information storage unit 48 as functional modules.

The prediction model 42 is the prediction model 42 constructed by the information processing system 30 for prediction model construction. The expansion-and-contraction ratio prediction unit 44 predicts the expansion and contraction ratio of the paper from the absorption amount input from the media sensor 10 using the prediction model 42. The image correction unit 46 corrects the image to be printed on the paper according to the expansion and contraction ratio predicted by the expansion-and-contraction ratio prediction unit 44. In this correction, the image is enlarged or reduced according to enlargement-and-reduction ratio information stored in the enlargement-and-reduction ratio information storage unit 48. The image corrected in this way is supplied to the printing mechanism 50 and printed on the paper.

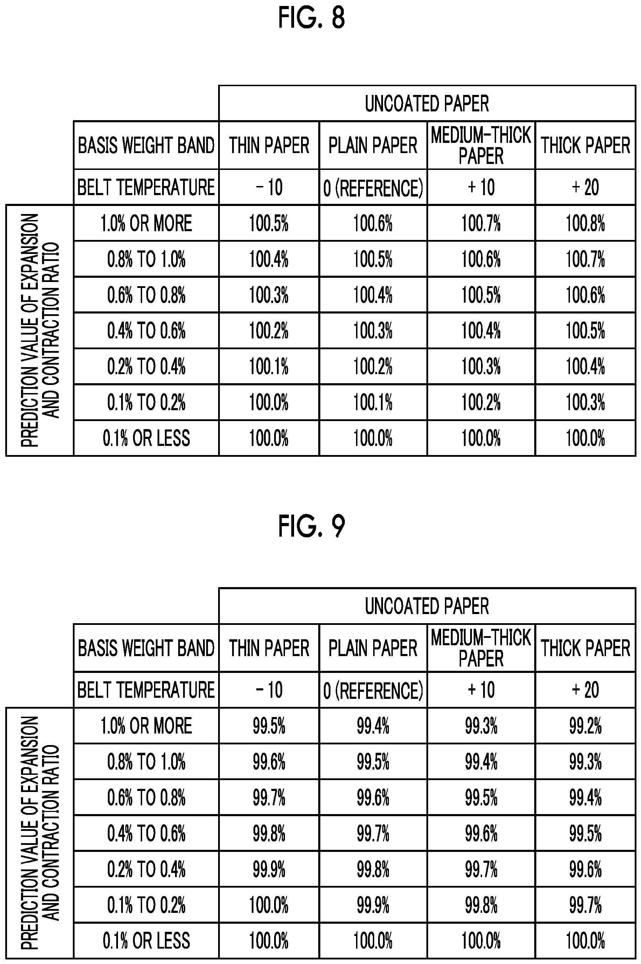

Figs. 8 and 9 illustrate examples of the enlargement-and-reduction ratio information stored in the enlargement-and-reduction ratio information storage unit 58. Fig. 8 illustrates an example of the enlargement-and-reduction ratio information used during one-sided printing or during printing on the front side in two-sided printing, and Fig. 9 illustrates an example of the enlargement-and-reduction ratio information used during printing on the back side in two-sided printing. These examples are examples of a case where the media sensor 10 measures the paper before the image is printed on the front side of the paper and the enlargement and reduction ratio of the image to be printed on the front side and the back side of the paper in two-sided printing is calculated according to the measurement result. That is, in this example, the absorption amount in the wavelength band of interest by the paper is measured before the image is printed on the front side, and each of the enlargement and reduction ratios of a front-side image and a back-side image is calculated using the expansion and contraction ratio of the paper at the time of the measurement calculated from the absorption amount.

The enlargement-and-reduction ratio information illustrated in Figs. 8 and 9 is in a tabular format and is for a paper type called uncoated paper. In the table, each row indicates a section of the expansion and contraction ratio of the paper, and each column indicates a basis weight band. In the illustrated example, the expansion and contraction ratio is divided into seven sections from a section of 0.1% or less to a section of 1.0% or more. The basis weight band is a section of the basis weight of the paper and is represented by a set of a lower limit and an upper limit of the basis weight in each section. However, in Figs. 8 and 9, the basis weight band is represented by a name indicating the thickness of the paper such as "thin paper", "plain paper", "medium-thick paper", and "thick paper". A belt temperature illustrated in a row immediately below the basis weight band is the temperature of a fixing belt for fixing the printed image to the paper. The belt temperature is automatically determined according to the type of paper. In Figs. 8 and 9, the belt temperature in the fixing process on the plain paper is used as a reference, and a positive or negative temperature difference from the reference is illustrated as the belt temperature in each basis weight band.

In Figs. 8 and 9, the enlargement and reduction ratio of the image corresponding to a combination of the section of the expansion and contraction ratio and the basis weight band is registered in a cell where each row and each column intersect each other. For the enlargement and reduction ratio, 100% indicates that the original image remains unchanged without being enlarged or reduced, a value greater than 100% indicates enlargement, and a value less than 100% indicates reduction. For example, an enlargement and reduction ratio of 100.5% applied in a case where the expansion and contraction ratio is equal to or greater than 1.0% and the basis weight band is thin paper indicates that the original image is enlarged to 100.5% (that is, to be 0.5% larger than the original size).

The examples in Figs. 8 and 9 are only examples. A state in which the humidity is at the lowest possible level is set as the reference state, and the size of the image to be printed on the front side of the paper in the reference state is set as a reference, that is, 100%. Since the other humidity is higher than the humidity in the reference state, the paper expands during printing on the front side, and the expansion and contraction ratio is higher than 100%. In the present exemplary embodiment, during one-sided printing or during printing on the front side in two-sided printing, the size of the image to be printed on the paper is increased or decreased according to how much the paper expands or contracts from the reference state during printing. The reason is that, in the example illustrated in Fig. 8, the enlargement ratio of the image is higher in the section in which the expansion and contraction ratio is higher.

Therefore, in a case where the identical image is printed on sheets of paper that are of the identical type and have the identical basis weight and size (for example, sheets of paper of the identical production lot), the images on the sheets of paper have the identical size in a case where the images are equilibrated to the identical environmental conditions after printing even though the environmental conditions (for example, humidity) during printing are different. That is, a variation in the size of the printed image depending on a difference in the environmental conditions during printing is suppressed.

In a case where the average humidity is set as the reference state, the humidity which is the environment during printing may be lower than the reference state. In this case, the amount of contraction of the paper is larger than the amount of contraction in the reference state. Therefore, in an example in which the average humidity is set as the reference state, a section including a negative value is also set as the section of the prediction value of the expansion and contraction ratio in the enlargement-and-reduction ratio information illustrated in Figs. 8 and 9.

The enlargement and reduction ratio of each cell in the enlargement-and-reduction ratio information for the back side illustrated in Fig. 9 is a value smaller than the enlargement and reduction ratio of the corresponding cell in the enlargement-and-reduction ratio information for the front side illustrated in Fig. 8. This reflects that water in the paper evaporates due to heating in the fixing unit (for example, the fixing belt) during printing on the front side and the paper contracts. As the paper is thicker, the paper is more likely to contract. Therefore, a reduction in the enlargement and reduction ratio is large as compared to the front side. The use of the enlargement-and-reduction ratio information illustrated in Fig. 9 makes it possible to make the size of the image printed on the back side of the paper equal to the size of the image printed on the front side of the paper. Therefore, it is possible to match the sizes in the registration of the front and back sides.

The enlargement-and-reduction ratio information illustrated in Figs. 8 and 9 may be created by conducting an experiment or the like in the development of the image forming apparatus.

In addition, in the case of an apparatus configuration in which the absorption amount in the wavelength band of interest is measured for the paper even at the positions after printing on the front side and before printing on the back side, the value of the enlargement and reduction ratio of each cell in the enlargement-and-reduction ratio information for the back side is larger than the value illustrated in Fig. 9. The reason is that, in the measurement at the position after printing on the front side and before printing on the back side, the paper in a state of being contracted due to the heating and fixing of the front-side image is measured and a process (for example, fixing) in which the paper further contracts is not included before printing on the back-side image after the measurement.

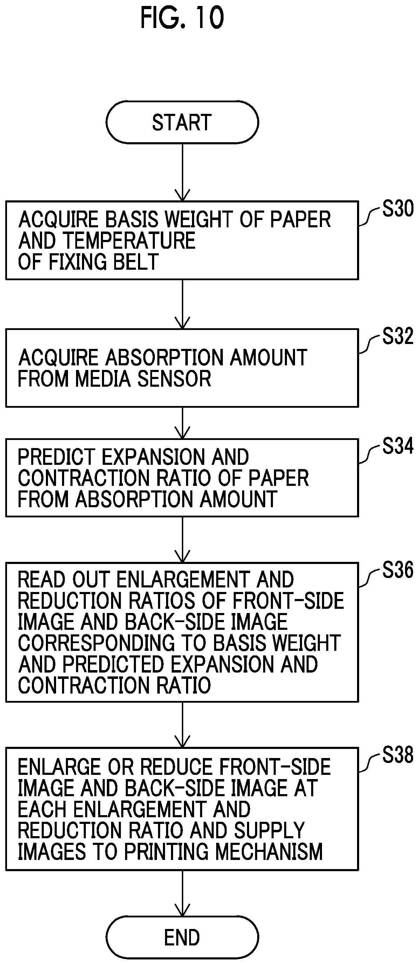

Next, an example of a processing procedure executed by the information processing system 40 will be described with reference to Fig. 10. The information processing system 40 executes the procedure illustrated in Fig. 10, for example, whenever a sheet of paper is taken out from the paper feeding unit and a printing process is performed on the paper.

In this procedure, first, the expansion-and-contraction ratio prediction unit 44 of the information processing system 40 acquires information of the basis weight of the paper to be printed and the fixing temperature applied to the paper (S30). For example, in a case where a paper bundle is set in the paper feeding unit, the operator needs to register the information of the basis weight in the information processing system 40. Therefore, the information may be acquired. Alternatively, the basis weight of the paper may be measured by the media sensor 10. Further, since the information of the fixing temperature corresponding to the basis weight of the paper is registered in advance in the information processing system 40, the information processing system 40 can ascertain the fixing temperature from the information.

Then, the expansion-and-contraction ratio prediction unit 44 of the information processing system 40 acquires the value of the absorption amount in the wavelength band of interest from the media sensor 10 that has measured the paper (S32) and calculates the expansion and contraction ratio of the paper corresponding to the absorption amount using the prediction model 42 (S34). For example, in a case where the prediction model 42 is a regression expression indicating the relationship between the absorption amount and the expansion and contraction ratio, the expansion-and-contraction ratio prediction unit 44 substitutes the absorption amount into the regression expression to calculate the expansion and contraction ratio.

Then, the image correction unit 46 of the information processing system 40 reads out the enlargement and reduction ratios of the front side and the back side corresponding to a combination of the basis weight acquired in S30 and the expansion and contraction ratio calculated in S34 from the enlargement-and-reduction ratio information storage unit 48 (S36). Then, the image correction unit 46 enlarges or reduces the image to be printed on the front side and the image to be printed on the back side of the paper at the enlargement and reduction ratios calculated in S36, respectively, and supplies the enlarged or reduced images to the printing mechanism 50 (S38). The printing mechanism 50 prints the image supplied from the image correction unit 46 on the front and back sides of the paper.

The example in which the size of the image to be printed on the paper is controlled using the expansion and contraction ratio of the paper predicted by the expansion-and-contraction ratio prediction unit 44 has been described above.

In the example illustrated in Fig. 10, not only the enlargement and reduction ratio of the image on the front side but also the enlargement and reduction ratio of the image on the back side is controlled using the prediction value of the expansion and contraction ratio of the paper calculated from the measurement result before printing on the front side of the paper. However, this is only an example. As another example, after the image printed on the front side of the paper is fixed and before printing on the back side, the absorption amount in the wavelength band of interest by the paper may be measured, the expansion and contraction ratio may be predicted from the absorption amount, and the enlargement and reduction ratio of the image on the back side may be controlled according to the predicted expansion and contraction ratio.

The exemplary embodiment of the present invention has been described above. However, the exemplary embodiment is only an example. Various modifications can be made within the scope of the technical idea of the present invention. For example, in the example illustrated in Fig. 7, the expansion-and-contraction ratio prediction unit 44 is provided inside the image forming apparatus 200. However, the expansion-and-contraction ratio prediction unit 44 may be provided outside the image forming apparatus 200. For example, a server that provides the functions of the expansion-and-contraction ratio prediction unit 44 may be present on a network, and the information processing system 40 of the image forming apparatus 200 may transmit the measurement result of the media sensor 10 to the server and may obtain the prediction value of the expansion and contraction ratio from the server.

Further, in the above-described example, the media sensor 10 calculates the absorption amount in the wavelength band of interest. However, as another example, the media sensor 10 may detect transmitted light in the wavelength band of interest and output the intensity of the transmitted light. The information processing system 40 may calculate the absorption amount in the wavelength band of interest by the paper from the intensity. That is, the process of calculating the absorption amount from the intensity of the transmitted light in the wavelength band of interest may be performed by a processor in the media sensor 10 or a processor in the information processing system 40.

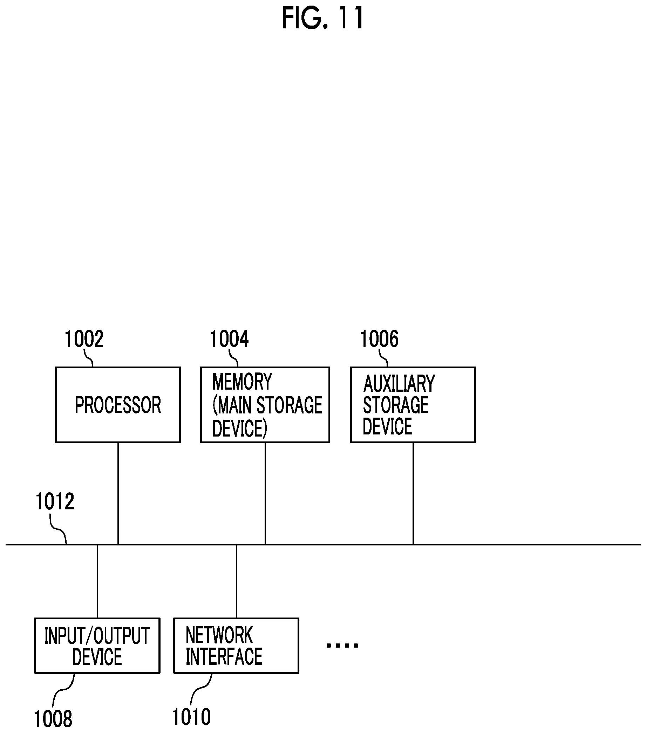

The information processing systems 30 and 40 described above are configured using, for example, a general-purpose computer. For example, as illustrated in Fig. 11, the computer has a circuit configuration in which a processor 1002, a memory (main storage device) 1004, such as a random access memory (RAM), a controller that controls an auxiliary storage device 1006, which is a non-volatile storage device, such as a flash memory, a solid state drive (SSD), or a hard disk drive (HDD), an interface with various input and output devices 1008, a network interface 1010 that performs control for connection to a network, such as a local area network, and the like are connected via a data transmission path such as a bus 1012. A program in which the content of the processes according to the above-described exemplary embodiment has been described is installed in the computer via the network or the like and stored in the auxiliary storage device 1006. The processor 1002 executes the program stored in the auxiliary storage device 1006 using the memory 1004 to implement an information processing mechanism according to the present exemplary embodiment. Further, the information processing systems 30 and 40 may include an image processing processor that performs image processing for general purposes or a specific purpose at a high speed, a dedicated processor for neural network processing, and the like.

Further, each of the information processing systems 30 and 40 may be configured by a single computer or a plurality of computers. For example, some of the functions of the information processing system 40 may be provided in another computer outside the image forming apparatus 200.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

(Supplementary Note)

(((1))) An information processing system comprising:

a processor; and
a sensor device,
wherein the sensor device irradiates target paper with light and detects light in an absorption band that is transmitted through the paper and caused by an expansion and contraction motion of H-O-H, and
the processor is configured to:

calculate absorption information indicating an absorption amount in the absorption band by the paper on the basis of a detection result by the sensor device; and
calculate an expansion and contraction ratio of the paper corresponding to the calculated absorption information using a prediction model that predicts the expansion and contraction ratio of the paper from the absorption information of the absorption band in the paper.

(((2))) The information processing system according to (((1))),
wherein the absorption band is a wavelength band in a vicinity of 1450 nm or in a vicinity of 2900 nm.
(((3))) The information processing system according to (((1))), wherein the processor is configured to:
enlarge or reduce an image to be printed on the paper according to the calculated expansion and contraction ratio.

(((4))) The information processing system according to (((3))), wherein the processor is configured to:

calculate each of an enlargement and reduction ratio of an image to be printed on a front side of the paper and an enlargement and reduction ratio of an image to be printed on a back side of the paper on the basis of the expansion and contraction ratio; and

enlarge or reduce the image to be printed on the front side of the paper and the image to be printed on the back side of the paper at the enlargement and reduction ratios calculated for each image, and

the enlargement and reduction ratio of the image to be printed on the back side of the paper is determined such that a size of the image on the back side printed after the image on the front side of the paper is fixed is equal to a size of the image on the front side.

(((5))) A program causing a computer to execute a process comprising:

acquiring a detection result by a sensor device that irradiates target paper with light and detects light in an absorption band that is transmitted through the paper and caused by an expansion and contraction motion of H-O-H and calculating absorption information indicating an absorption amount in the absorption band by the paper from the acquired detection result; and

calculating an expansion and contraction ratio of the paper corresponding to the calculated absorption information using a prediction model that predicts the expansion and contraction ratio of the paper from the absorption information of the absorption band in the paper.

According to the information processing system described in (((1))) and (((2))) and the program described in (((5))), it is possible to provide a method for calculating an expansion and contraction ratio of paper with respect to the dimension of the paper in a reference environment.

According to the information processing system described in (((3))), it is possible to print an image having a size corresponding to the current expansion and contraction state of the paper.

According to the information processing system described in (((4))), it is possible to match the sizes of the images on the front and back sides of the paper in two-sided printing.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

Brief Description of the Reference Symbols

10: media sensor
12: light source
14: light detector
20: expansion and contraction test apparatus
30: information processing system for prediction model construction
40: information processing system
42: prediction model
44: expansion-and-contraction ratio prediction unit
46: image correction unit
48: enlargement-and-reduction ratio information storage unit
50: printing mechanism
200: image forming apparatus

Claims

1.  An information processing system comprising:

a processor; and
a sensor device,
wherein the sensor device irradiates target paper with light and detects light in an absorption band that is transmitted through the paper and caused by an expansion and contraction motion of H-O-H, and the processor is configured to:

calculate absorption information indicating an absorption amount in the absorption band by the paper on the basis of a detection result by the sensor device; and
calculate an expansion and contraction ratio of the paper corresponding to the calculated absorption information using a prediction model that predicts the expansion and contraction ratio of the paper from the absorption information of the absorption band in the paper.

2. The information processing system according to claim 1,
wherein the absorption band is a wavelength band in a vicinity of 1450 nm or in a vicinity of 2900 nm.

3. The information processing system according to claim 1, wherein the processor is configured to:
enlarge or reduce an image to be printed on the paper according to the calculated expansion and contraction ratio.

4. The information processing system according to claim 3, wherein the processor is configured to:

calculate each of an enlargement and reduction ratio of an image to be printed on a front side of the paper and an enlargement and reduction ratio of an image to be printed on a back side of the paper on the basis of the expansion and contraction ratio; and
enlarge or reduce the image to be printed on the front side of the paper and the image to be printed on the back side of the paper at the enlargement and reduction ratios calculated for each image, and
the enlargement and reduction ratio of the image to be printed on the back side of the paper is determined such that a size of the image on the back side printed after the image on the front side of the paper is fixed is equal to a size of the image on the front side.

5. A program causing a computer to execute a process comprising:

acquiring a detection result by a sensor device that irradiates target paper with light and detects light in an absorption band that is transmitted through the paper and caused by an expansion and contraction motion of H-O-H and calculating absorption information indicating an absorption amount in the absorption band by the paper from the acquired detection result; and
calculating an expansion and contraction ratio of the paper corresponding to the calculated absorption information using a prediction model that predicts the expansion and contraction ratio of the paper from the absorption information of the absorption band in the paper.

6. An information processing method comprising:

acquiring a detection result by a sensor device that irradiates target paper with light and detects light in an absorption band that is transmitted through the paper and caused by an expansion and contraction motion of H-O-H and calculating absorption information indicating an absorption amount in the absorption band by the paper from the acquired detection result; and
calculating an expansion and contraction ratio of the paper corresponding to the calculated absorption information using a prediction model that predicts the expansion and contraction ratio of the paper from the absorption information of the absorption band in the paper.

# FIG. 1

10 — MEDIA SENSOR

12 — LIGHT SOURCE

14 — LIGHT DETECTOR

20 — EXPANSION AND CONTRACTION TEST APPARATUS

ABSORPTION AMOUNT IN WAVELENGTH BAND OF INTEREST (OR DETECTION INTENSITY)

DIMENSION OF PAPER (OR AMOUNT OF CHANGE)

INFORMATION PROCESSING SYSTEM FOR PREDICTION MODEL CONSTRUCTION

30

# FIG. 2

START

SET (CHANGE) HUMIDITY OF ENVIRONMENT OF PAPER —S10

ACCUSTOM PAPER TO ENVIRONMENT —S12

READ DIMENSION OR THE LIKE OF PAPER —S14

MEASURE ABSORPTION AMOUNT IN 1450 nm BAND —S16

STORE PAIR OF EXPANSION AND CONTRACTION RATIO AND ABSORPTION AMOUNT —S18

HAS MEASUREMENT FOR ALL OF SCHEDULED HUMIDITIES BEEN COMPLETED? —S20

No

Yes

CONSTRUCT PREDICTION MODEL THAT PREDICTS EXPANSION AND CONTRACTION RATIO FROM ABSORPTION AMOUNT —S22

END

## FIG. 3

Y = −1.7508X + 2.8664

MEASURED VALUE OF EXPANSION AND CONTRACTION RATIO (%)

SPECTRAL AMOUNT IN NEAR-INFRARED LIGHT IN 1450 nm BAND

## FIG. 4

Y = −36.6991X + 1.3118

MEASURED VALUE OF EXPANSION AND CONTRACTION RATIO (%)

SPECTRAL AMOUNT IN NEAR-INFRARED LIGHT IN 1940 nm BAND

## FIG. 5

Graph showing y = 1.0023x, with label 106. Y-axis: PREDICTION VALUE OF EXPANSION AND CONTRACTION RATIO (%). X-axis: MEASURED VALUE OF EXPANSION AND CONTRACTION RATIO (%).

## FIG. 6

Graph showing y = 0.9697x, with label 108. Y-axis: PREDICTION VALUE OF EXPANSION AND CONTRACTION RATIO (%). X-axis: MEASURED VALUE OF EXPANSION AND CONTRACTION RATIO (%).

# FIG. 7

200

INFORMATION FORMING APPARATUS

10 — MEDIA SENSOR

12 — LIGHT SOURCE

14 — LIGHT DETECTOR

ABSORPTION AMOUNT IN
WAVELENGTH BAND OF INTEREST
(OR DETECTION INTENSITY)

42

44 — EXPANSION-AND-CONTRACTION RATIO PREDICTION UNIT ⟷ PREDICTION MODEL

46 — IMAGE CORRECTION UNIT ⟷ ENLARGEMENT-AND-REDUCTION RATIO INFORMATION STORAGE UNIT

40

INFORMATION PROCESSING SYSTEM

40

50 — PRINTING MECHANISM

## FIG. 8

| | | UNCOATED PAPER | | | |
|---|---|---|---|---|---|
| | BASIS WEIGHT BAND | THIN PAPER | PLAIN PAPER | MEDIUM-THICK PAPER | THICK PAPER |
| | BELT TEMPERATURE | − 10 | 0 (REFERENCE) | + 10 | + 20 |
| PREDICTION VALUE OF EXPANSION AND CONTRACTION RATIO | 1.0% OR MORE | 100.5% | 100.6% | 100.7% | 100.8% |
| | 0.8% TO 1.0% | 100.4% | 100.5% | 100.6% | 100.7% |
| | 0.6% TO 0.8% | 100.3% | 100.4% | 100.5% | 100.6% |
| | 0.4% TO 0.6% | 100.2% | 100.3% | 100.4% | 100.5% |
| | 0.2% TO 0.4% | 100.1% | 100.2% | 100.3% | 100.4% |
| | 0.1% TO 0.2% | 100.0% | 100.1% | 100.2% | 100.3% |
| | 0.1% OR LESS | 100.0% | 100.0% | 100.0% | 100.0% |

## FIG. 9

| | | UNCOATED PAPER | | | |
|---|---|---|---|---|---|
| | BASIS WEIGHT BAND | THIN PAPER | PLAIN PAPER | MEDIUM-THICK PAPER | THICK PAPER |
| | BELT TEMPERATURE | − 10 | 0 (REFERENCE) | + 10 | + 20 |
| PREDICTION VALUE OF EXPANSION AND CONTRACTION RATIO | 1.0% OR MORE | 99.5% | 99.4% | 99.3% | 99.2% |
| | 0.8% TO 1.0% | 99.6% | 99.5% | 99.4% | 99.3% |
| | 0.6% TO 0.8% | 99.7% | 99.6% | 99.5% | 99.4% |
| | 0.4% TO 0.6% | 99.8% | 99.7% | 99.6% | 99.5% |
| | 0.2% TO 0.4% | 99.9% | 99.8% | 99.7% | 99.6% |
| | 0.1% TO 0.2% | 100.0% | 99.9% | 99.8% | 99.7% |
| | 0.1% OR LESS | 100.0% | 100.0% | 100.0% | 100.0% |

# FIG. 10

START

ACQUIRE BASIS WEIGHT OF PAPER AND TEMPERATURE OF FIXING BELT — S30

ACQUIRE ABSORPTION AMOUNT FROM MEDIA SENSOR — S32

PREDICT EXPANSION AND CONTRACTION RATIO OF PAPER FROM ABSORPTION AMOUNT — S34

READ OUT ENLARGEMENT AND REDUCTION RATIOS OF FRONT-SIDE IMAGE AND BACK-SIDE IMAGE CORRESPONDING TO BASIS WEIGHT AND PREDICTED EXPANSION AND CONTRACTION RATIO — S36

ENLARGE OR REDUCE FRONT-SIDE IMAGE AND BACK-SIDE IMAGE AT EACH ENLARGEMENT AND REDUCTION RATIO AND SUPPLY IMAGES TO PRINTING MECHANISM — S38

END

# FIG. 11

1002
PROCESSOR

1004
MEMORY
(MAIN STORAGE
DEVICE)

1006
AUXILIARY
STORAGE
DEVICE

1012

1008
INPUT/OUTPUT
DEVICE

1010
NETWORK
INTERFACE

. . . .

Europäisches
Patentamt

European
Patent Office

Office européen
des brevets

**EUROPEAN SEARCH REPORT**

Application Number

EP 24 15 9950

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/237231 A1 (OHSHIMA MINORU [JP] ET AL) 20 September 2012 (2012-09-20) * paragraph [0033] - paragraph [0059]; figures 1, 13 * | 1-6 | INV. G03G21/20 H04N1/00 G01N21/86 |
| | ----- | | |
| Y | US 2021/239609 A1 (YAMADA SACHIYO [JP] ET AL) 5 August 2021 (2021-08-05) * paragraph [0067]; figure 9 * | 1-6 | |
| | ----- | | |
| T | Banwell C N: "Fundamentals of Molecular Spectroscopy", , 1 January 1983 (1983-01-01), XP093194052, Retrieved from the Internet: URL:http://www.rnlkwc.ac.in/pdf/study-material/chemistry/Spectroscopy.pdf [retrieved on 2014-08-09] * page 91 - page 94 * | | |
| | ----- | | |

TECHNICAL FIELDS
SEARCHED    (IPC)

G03G
H04N

The present search report has been drawn up for all claims

| Place of search | Date of completion of the search | Examiner |
|---|---|---|
| The Hague | 10 August 2024 | Lauritzen, Jan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 9950

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2024

| Patent document cited in search report | Publication date | Patent family member(s) | | Publication date |
|---|---|---|---|---|
| US 2012237231 A1 | 20-09-2012 | AU | 2011239289 A1 | 04-10-2012 |
| | | CN | 102681378 A | 19-09-2012 |
| | | JP | 2012194361 A | 11-10-2012 |
| | | US | 2012237231 A1 | 20-09-2012 |
| US 2021239609 A1 | 05-08-2021 | JP | 2020027036 A | 20-02-2020 |
| | | US | 2021239609 A1 | 05-08-2021 |
| | | WO | 2020036723 A1 | 20-02-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021105629 A
- JP 2019045740 A
- JP 2009128874 A
- JP 7243187 A